Europäisches Patentamt

European Patent Office

Office européen des brevets

(19)

(11) **EP 0 457 414 B1**

(12) **FASCICULE DE BREVET EUROPEEN**

(45) Date de publication et mention
de la délivrance du brevet:
**01.04.1998 Bulletin 1998/14**

(51) Int Cl.⁶: **G06T 5/00**

(21) Numéro de dépôt: **91201191.3**

(22) Date de dépôt: **17.05.1991**

(54) **Dispositif de détection d'objets dans une séquence d'images**

Vorrichtung zur Auffindung von Objekten in einer Bildsequenz

Object detection device in an image sequence

(84) Etats contractants désignés:
**DE FR GB NL**

(30) Priorité: **18.05.1990 FR 9006254**

(43) Date de publication de la demande:
**21.11.1991 Bulletin 1991/47**

(73) Titulaires:
• **LABORATOIRES D'ELECTRONIQUE PHILIPS
  S.A.S.
  94450 Limeil-Brévannes (FR)**
  Etats contractants désignés:
  **FR**
• **Philips Electronics N.V.
  5621 BA Eindhoven (NL)**
  Etats contractants désignés:
  **DE GB NL**

(72) Inventeur: **Florent, Raoul, Société Civile S.P.I.D.
F-75008 Paris (FR)**

(74) Mandataire: **Landousy, Christian et al
Société Civile S.P.I.D.
156, Boulevard Haussmann
75008 Paris (FR)**

(56) Documents cités:
**WO-A-90/01706**          **GB-A- 2 215 938**

• **PROCEEDINGS OF THE SPIE vol. 937, no. 6, Avril
  1988, ORLANDO, FLORIDA pages 505 - 511;
  THOMAS ET AL.: 'MOTION FILTERING FOR
  TARGET EXTRACTION AND TRACKING IN
  INFRARED IMAGES '**

**Description**

La présente invention concerne un dispositif de détection d'un ou de plusieurs objets dans une séquence d'images, ledit dispositif comprenant notamment des moyens de recalage d'images. Un tel dispositif est utilisable notamment dans des applications du type surveillance ou contrôle de trafic par exemple, ou encore pour le traitement d'images dans le domaine médical. Il va de soi que le terme "objet" doit ici être considéré dans le sens large, et qu'il englobe aussi bien les objets inanimés que les personnes ou les animaux éventuellement, sans limitation d'aucune sorte quant à la nature de ces "objets". En outre, il faut dès à présent préciser que les informations d'entrée du dispositif selon l'invention son des images numériques comprenant un certain nombre de points d'image auxquels sont associées des valeurs de luminosité, et qu'il n'est donc pas nécessaire de s'intéresser à la manière dont ces images ont été acquises, là encore aucune limitation n'ayant à être signalée. Il n'est même pas nécessaire de faire des hypothèses sur la plus ou moins grande cadence de mouvement dans les images (la seule hypothèse à retenir étant celle d'une séquence d'images continue, sans changement de plan), de grands déplacements entre deux images successives pouvant être pris en compte si le recalage peut être effectué.

Le but de l'invention est de proposer un dispositif de détection d'objets d'une simplicité et d'une robustesse suffisantes pour s'adapter à un large éventail de type d'images acquises, les objets pouvant être, dans les scènes observées, plus ou moins nombreux, plus ou moins mobiles, et plus ou moins contrastés par rapport au fond des images, avec des trajectoires respectives qui se coupent éventuellement.

A cet effet l'invention concerne un dispositif tel que défini dans le préambule de la description et qui est en outre caractérisé en ce qu'il comprend:

(A) en parallèle en sortie desdits moyens de recalage, des moyens de rehaussement du contraste des objets à l'intérieur d'une image recalée et des moyens de rehaussement du contraste des objets mobiles entre deux images recalées ;

(B) des moyens de décision recevant les signaux de sortie desdits moyens (200,300) de rehaussement du contraste, prévus pour la sélection définitive des objets détectés par extraction des signaux considérés comme correspondant aux objects détectés;

lesdits moyens de rehaussement du contraste des objets à l'intérieur d'une image recalée agissant sur chacun des points de l'image recalée à l'exception de ceux situés en bordure d'image et comprenant en série :

(a) un filtre passe-bas, prévu pour déterminer pour chacun desdits points et en particulier pour p points voisins de chaque point considéré, une moyenne locale de luminosité ;

(b) un circuit de calcul, pour chacun desdits p points voisins dudit point considéré, de la différence entre le signal de luminosité associé audit point considéré et la moyenne locale de luminosité déterminé par ledit filtre pour un point respectif desdits p points voisins ;

(c) un circuit de sélection de la plus faible, ou de l'une des plus faibles, de ces différences, qui constitue le signal de sortie desdits moyens de rehaussement de contraste ;

et lesdits moyens de rehaussement du contraste des objets mobiles comprenant, pour chaque point de l'image recalée considérée :

(a) une mémoire de stockage temporaire de N images recalées antérieures à l'image recalée courante, N étant un nombre entier positif ;

(b) un circuit de calcul, pour chaque point d'une image recalée courante, des différences entre le signal de luminosité associé audit point considéré et des signaux de luminosité associés aux mêmes coordonnées spatiales que ledit point considéré dans la N-ième image recalée antérieure ;

(c) un circuit de sélection de la plus faible de ces différences.

Dans un mode de réalisation préférentiel, ce dispositif est, par ailleurs, caractérisé en ce que ledit circuit de calcul desdits moyens de rehaussement du contraste des objets mobiles est un circuit de calcul de p+1 différences entre le signal de luminosité associé audit point considéré et les signaux de luminosité associés, dans la N-ième image recalée antérieure, au point de mêmes coordonnées spatiales et aux p points voisins de ce point antérieur.

Dans l'un ou l'autre de ces modes de réalisation, le circuit de sélection des moyens de rehaussement du contraste des objets à l'intérieur d'une image recalée peut être notamment un filtre de rang prévu pour éliminer une ou plusieurs des plus faibles différences ainsi calculées et sélectionner la plus faible des différences résiduelles après cette élimination.

En outre, qu'il s'agisse du contraste des objets à l'intérieur d'une image recalée ou de celui des objets mobiles entre deux images recalées, les moyens de rehaussement de ce contraste peuvent comprendre un circuit de remplacement des différences négatives par la valeur zéro.

D'autre part, en ce qui concerne la sélection définitive des objets détectés, le dispositif selon l'invention peut être notamment proposé dans trois modes de réalisations particuliers.

Selon le premier, le dispositif est caractérisé en ce que lesdits moyens de décision comprennent :

(a) un circuit de multiplication de deux grandeurs directement liées aux signaux de sortie respectifs desdits moyens de rehaussement du contraste des objets à l'intérieur d'une image recalée et desdits moyens de rehaussement du contraste des objets mobiles ;
(b) un circuit de décision à seuil, pour l'extraction finale des signaux qui, au-dessus dudit seuil, sont considérés comme correspondant effectivement aux objets à détecter.

Selon le second mode de réalisation, le dispositif est caractérisé en ce que lesdits moyens de décision comprennent :

(a) un circuit de remplacement des signaux de sortie négatifs du circuit de rehaussement du contraste des objets à l'intérieur d'une image recalée par la valeur zéro ;
(b) un circuit de multiplication de deux grandeurs directement liées aux signaux de sortie respectifs dudit circuit de remplacement et des moyens de rehaussement du contraste des objets mobiles ;
(c) un circuit de décision à seuil, pour l'extraction finale des signaux qui, au-dessus dudit seuil, sont considérés comme correspondant effectivement aux objets à détecter.

Selon le troisième mode de réalisation, le dispositif est caractérisé en ce que lesdits moyens de décision comprennent :

(a) un circuit de remplacement des signaux de sortie négatifs du circuit de rehaussement du contraste des objets mobiles par la valeur zéro ;
(b) un circuit de multiplication de deux grandeurs directement liées aux signaux de sortie respectifs des moyens de rehaussement du contraste des objets à l'intérieur d'une image recalée et dudit circuit de remplacement ;
(c) un circuit de décision à seuil, pour l'extraction finale des signaux qui, au-dessus dudit seuil, sont considérés comme correspondant effectivement aux objets à détecter.

Dans l'un ou l'autre de ces trois modes de réalisation, le seuil du circuit de décision peut être prédéterminé en fonction d'un nombre maximal d'alarmes voulu, ou bien être choisi de façon à optimiser un critère reliant la probabilité de fausse alarme et le taux de détection, par exemple le rapport du nombre d'objets détectés au nombre de fausses alarmes.

Enfin, en choisissant de façon appropriée les circuits mettant en oeuvre les différentes opérations élémentaires prévues dans le dispositif, les divers moyens de recalage, de rehaussement de contraste, et de sélection définitive des objets détectés qui le composent peuvent être de façon très avantageuse, organisés pour le faire fonctionner en temps réel.

Les particularités et avantages de l'invention apparaîtront de façon plus précise dans la description qui suit et dans les dessins annexés, donnés à titre d'exemples non limitatifs et dans lesquels :

- la figure 1 montre un exemple de réalisation d'un dispositif de détection d'objets selon l'invention ;
- les figures 2, 3a et 4a montrent un exemple de réalisation respectivement des moyens de rehaussement du contraste des objects à l'intérieur d'une image recalée, des moyens de rehaussement du contraste des objects mobiles, et des moyens de sélection définitive ;
- les figures 3b et 4b montrent des variantes de réalisation des moyens représentés sur les figures 3a et 4a.

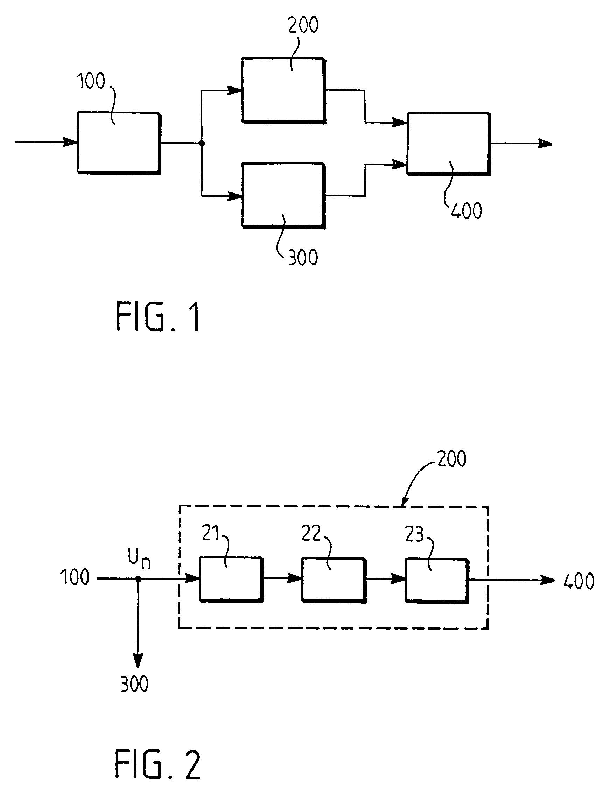

Le dispositif de détection d'objets représenté sur la figure 1 comprend tout d'abord des moyens de recalage d'images 100. On rappellera ici que le recalage d'images est une opération en elle-même connue, et décrite par exemple dans l'ouvrage "Digital image processing", de W.K. Pratt, J. Wiley and Sons, 1978. Son principe est le suivant. Considérant dans une séquence d'images une première image de référence et une deuxième image qui lui est postérieure, on choisit dans l'image de référence quelques zones d'intérêt, que l'on appelle zones de référence et qui sont centrées sur ce qu'on peut appeler des points de référence, et l'on recherche dans la deuxième image, en fonction d'un critère déterminé, les zones qui s'accordent le mieux à ces zones de référence et que l'on appelle alors des zones d'accord, centrées sur des points dits d'accord. Ces points de référence et ces points d'accord sont alors associés de telle sorte qu'on dispose d'un jeu de vecteurs de déplacement dont l'ensemble constitue une carte représentative de la transformation paramétrique globale reliant ces deux images, les paramètres de ladite transformation étant par exemple les coordonnées d'un vecteur de translation, l'angle d'une rotation et les coordonnées de son centre, ou encore les coordonnées du centre d'un zoom associées à un facteur d'échelle de l'effet de zoom. Il ne reste plus qu'à construire la version compensée -dite image recalée- de la deuxième image, en appliquant la transformation inverse à tous les points d'image de cette deuxième image, et en effectuant les interpolations nécessaires.

Les moyens de recalage d'images 100 sont suivis, comme indiqué sur la figure 1, de moyens 200 de rehaussement du contraste des objets à l'intérieur d'une image recalée. Dans le mode particulier de réalisation représenté sur la figure 2, ces moyens 200 comprennent d'abord un filtre passe-bas 21, qui reçoit les signaux de sortie des moyens de recalage d'images 100, c'est-à-dire l'image recalée courante, notée par exemple $U_N$. Cette image courante $U_N$ est constituée d'un certain nombre de points d'image recalée auxquels sont associées des valeurs de luminosité exprimées en bits sur une dynamique déterminée. Le filtre passe-bas 21 a pour fonction de déterminer p moyennes locales de luminosité (avec ici $p = 8$) autour d'un point de ladite image recalée, la répartition spatiale de ces moyennes spatiales étant liée à la taille des objets à détecter. Cette opération de filtrage est bien entendu généralisée à l'ensemble de l'image recalée (sauf pour les points de l'image situés en bordure de celle-ci : on n'essaie pas de détecter les objets en bordure d'image). Un tel filtre ne sera pas davantage décrit, un exemple de type similaire en étant en effet donné dans l'article "Target acquisition and extraction from cluttered backgrounds" de S.A. Dudeni, SPIE, vol.302, Infrared Technology for Target Detection and Classification, 1981, pp.43-50.

Le filtre passe-bas 21 est suivi d'un circuit de calcul 22 qui, pour chacun des p points voisins dudit point de l'image recalée et correspondant auxdites moyennes locales déterminées, évalue la différence entre le signal de luminosité associé audit point et le signal de luminosité associé dans l'image recalée filtrée à un point respectif desdits p points. Bien entendu, cette opération de calcul de différences est, comme le filtrage précédent, généralisée à l'ensemble de l'image recalée excepté les points situés en bordure de celle-ci, et il en est de même pour l'opération suivante. En effet, un circuit de sélection 23 compare enfin deux à deux ces p différences et sélectionne la plus faible d'entre elles, ou bien, ce qui donne plus de robustesse quant à l'apparition d'un objet brillant dans la région d'une des moyennes locales, inclut un filtre de rang qui sélectionne l'une des plus faibles de ces différences. La différence ainsi sélectionnée constitue le signal de sortie des moyens de rehaussement de contraste 200 dans l'exemple particulier ici décrit.

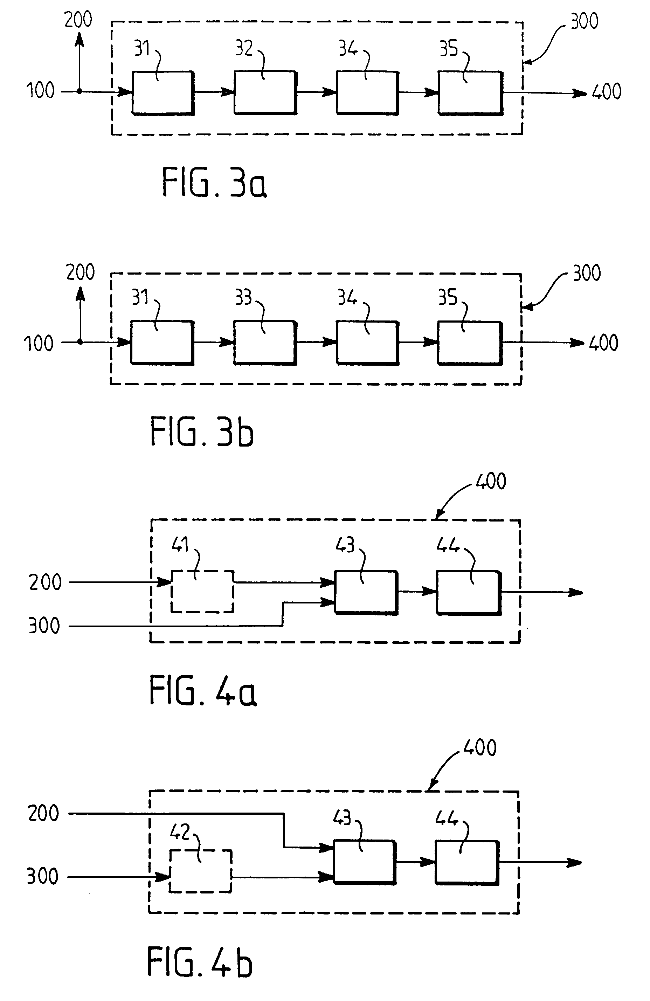

Les moyens de recalage d'images 100 sont également suivis, comme le montre la figure 1, de moyens 300 de rehaussement du contraste des objets mobiles entre deux images recalées. Dans le mode particulier de réalisation représenté sur la figure 3a, ces moyens 300 comprennent d'abord une mémoire 31 de stockage temporaire de N images recalées antérieures à l'image recalée courante (N étant un nombre entier positif : 1, 2, ... etc ...). Un circuit de calcul 32 effectue alors, pour chaque point d'une image recalée courante, les différences entre le signal de luminosité associé audit chaque point de l'image recalée courante et des signaux de luminosité associés à des points qui lui correspondent spatialement dans la N-ième image recalée antérieure, puis le choix de la plus faible de ces différences est effectué par un circuit de sélection 34. La sortie de ce circuit 34 constitue celle des moyens de rehaussement de contraste 300, dans l'exemple ici décrit.

Dans un autre exemple de réalisation de ces moyens de rehaussement de contraste 300, représenté sur la figure 3b, le circuit de calcul 32 est remplacé par un circuit de calcul 33 effectuant cette fois les différences entre le signal de luminosité associé à chaque point de l'image recalée courante et le signal de luminosité associé, dans la N-ième image recalée antérieure, au point correspondant spatialement audit point de l'image courante et aux p points qui entourent ce point correspondant. La valeur de N dépend de la vitesse de l'objet à détecter, la plus petite des vitesses détectables étant ici un déplacement de 2 pixels pendant N images. Là encore, le calcul de différences ainsi effectué est généralisé à l'ensemble des points de l'image recalée courante sauf ceux situés en bordure de celle-ci, de même que l'opération de sélection qui suit ce calcul.

On a vu ci-dessus que le circuit de sélection 23 peut comprendre un filtre de rang qui élimine une ou plusieurs des plus faibles différences ainsi calculées et sélectionne, après cette élimination, la plus faible des différences résiduelles. On précisera ici également que les moyens de rehaussement de contraste peuvent comprendre, l'un ou l'autre ou les deux simultanément, un circuit 35 de remplacement des différences négatives par la valeur zéro, placé par exemple en sortie du circuit de sélection 34 (ce circuit 35 n'a donc, dans le cas présent, été représenté que, par exemple, en sortie des moyens 300, sur les figures 3a et 3b).

Pour des objets plus brillants que le fond, la présence d'un tel circuit de remplacement en association aux moyens 200 est destinée à permettre de ne pas tenir compte des points de contraste local négatif, correspondant en fait à des objets de moins en moins ponctuels. La présence d'un tel circuit en association aux moyens 300 est destinée à permettre de ne pas tenir compte des transitions objet-fond, correspondant à des zones de découvrement.

En sortie des moyens 200 de rehaussement du contraste des objets à l'intérieur d'une image recalée et des moyens 300 de rehaussement du contraste des objets mobiles sont ensuite prévus des moyens 400 dits de sélection définitive des signaux qui vont être considérés comme correspondant aux objets à détecter. Dans le mode particulier de réalisation représenté sur la figure 4a, ces moyens 400 comprennent d'abord un circuit de multiplication 43 de deux grandeurs f et g, liées (selon un compromis par exemple du type pondération) la première au signal de sortie des moyens de rehaussement de contraste 200 et la seconde au signal de sortie des moyens de rehaussement de contraste 300.

De manière avantageuse, ces deux grandeurs peuvent être tout simplement lesdits signaux de sortie respectifs de ces moyens 200 et 300, mais ce n'est là qu'un exemple non limitatif. En utilisant par exemple les notations suivantes :

x = signal de sortie des moyens 200 ;
y = signal de sortie des moyens 300 ;
k = contraste (ou différence de luminosité) entre le niveau de gris correspondant à un objet et la valeur moyenne du niveau de gris pour la zone de fond qui entoure cet objet ;
s = écart-type du bruit dans l'image ;
n = le nombre de points du masque de filtrage utilisé dans les moyens 200 ;
m = le nombre de points d'image voisins considérés dans les moyens 200 ;

les grandeurs f et g peuvent alors être celles indiquées par les formules (1) et (2) en annexe de la présente description. Les expressions N(.) et erf(.) apparaissant dans ces formules sont elles-mêmes indiquées à l'aide des formules (3) et (4) également annexées, en remplaçant de manière évidente a et b par les valeurs correspondantes observées dans les formules (1) et (2). Cette deuxième approche, qui se réfère à une mise en oeuvre du critère dit du maximum de vraisemblance, est valable sous réserve de l'application d'hypothèses simplificatrices (fond uniforme, dans lequel chaque point d'image est affecté d'un bruit gaussien additif indépendant, de moyenne nulle et de même variance).

En sortie du circuit de multiplication 43, un circuit de décision à seuil 44 permet l'extraction finale des signaux considérés comme correspondant effectivement aux objets à détecter. Le choix du seuil est lié au type de cible, c'est-à-dire à la nature statistique de l'image en sortie des moyens 400, et on le déterminera donc en général en fonction de l'histogramme de l'image. Dans un autre mode de réalisation, le circuit de décision 44 opère avec un seuil qui est simplement prédéterminé en fonction du nombre maximal d'alarmes voulu, ou bien le seuil est choisi de façon à optimiser un critère reliant la probabilité de fausse alarme et le taux de détection, par exemple le rapport du nombre d'objets détectés au nombre de fausses alarmes.

Bien entendu, la présente invention n'est pas limitée aux exemples de réalisation qui viennent d'être décrits, à partir desquels des variantes peuvent encore être proposées, tout en restant dans le cadre de l'invention. En particulier, on a mentionné la présence, en sortie des moyens de rehaussement de contraste 200 ou 300, d'un circuit 35 de remplacement des différences négatives par la valeur zéro. Il est possible d'inclure un circuit de ce type non pas dans ces moyens 200 ou 300, mais dans les moyens de sélection définitive 400, comme indiqué en trait interrompu sur la figure 4a qui montre un circuit 41, placé entre la sortie des moyens de rehaussement de contraste 200 et l'entrée correspondante du circuit de multiplication 43, ou bien sur la figure 4b, qui montre la mise en place d'un circuit 42 similaire placé entre la sortie des moyens de rehaussement de contraste 300 et l'autre entrée du circuit de multiplication 43.

On précisera également qu'il est extrêmement intéressant que le dispositif décrit puisse fonctionner en temps réel. Les différentes opérations élémentaires (filtrage linéaire ou morphologique, différence, produit, tables de codage pour la mise en place des fonctions f et g, etc...) sont alors réalisées à l'aide de cartes électroniques de traitement d'image disponibles sur le marché, telles que les cartes de marque déposée "Datacube" de la Société Datacube Inc., 4 Dearborn Road, Peabody, MA 01960, USA. Une telle réalisation permet un fonctionnement du dispositif en temps réel, à la cadence vidéo.

ANNEXE

$$\text{Formule (1) :} \qquad f(x) = \frac{N_{k,s/n}(x)}{N_{o,s(1+\frac{1}{\sqrt{n}})}(x)} \cdot \frac{\frac{1}{2} - erf\left(\frac{x-k}{s/\sqrt{n}}\right)^{m-1}}{\frac{1}{2} - erf\left(\frac{x}{s(1+1/\sqrt{n})}\right)^{m-1}}$$

$$\text{Formule (2) :} \qquad g(y) = \frac{N_{k,s}(y)}{N_{o,s\sqrt{2}}(y)}$$

$$\text{Formule (3) :} \qquad N_{a,b}(x) = \frac{1}{\pi b \sqrt{2}} e^{-(x-a)^2/2b^2}$$

Formule (4) :

$$\mathrm{erf}(x) = \frac{1}{\pi \sqrt{2}} \int_{o}^{x} e^{-\frac{1}{2}y^2} dy$$

## Revendications

1. Dispositif de détection d'un ou de plusieurs objets dans une séquence d'images, ledit dispositif comprenant notamment des moyens de recalage d'images et étant en outre caractérisé en ce qu'il comprend:

   (A) en parallèle en sortie desdits moyens de recalage, des moyens (200) de rehaussement du contraste des objets à l'intérieur d'une image recalée et des moyens (300) de rehaussement du contraste des objets mobiles entre deux images recalées ;
   (B) des moyens (400) de décision recevant les signaux de sortie desdits moyens (200, 300) de rehaussement du contraste, prévus pour la sélection définitive des objets détectés par extraction des signaux considérés comme correspondant aux objets détectés ;

   lesdits moyens (200) de rehaussement du contraste des objets à l'intérieur d'une image recalée agissant sur chacun des points de l'image recalée à l'exception de ceux situés en bordure d'image, et comprenant en série :

   (a) un filtre passe-bas (21), prévu pour déterminer pour chacun desdits points et en particulier pour p points voisins de chaque point considéré, une moyenne locale de luminosité ;
   (b) un circuit (22) de calcul, pour chacun desdits p points voisins dudit point considéré, de la différence entre le signal de luminosité associé audit point considéré et la moyenne locale de luminosité déterminé par ledit filtre pour un point respectif desdits p points voisins ;
   (c) un circuit (23) de sélection de la plus faible, ou de l'une des plus faibles, de ces différences, qui constitue le signal de sortie desdits moyens (200) de rehaussement de contraste ;

   et lesdits moyens (300) de rehaussement du contraste des objets mobiles comprenant, pour chaque point de l'image recalée considérée :

   (a) une mémoire (31) de stockage temporaire de N images recalées antérieures à l'image recalée courante, N étant un nombre entier positif ;
   (b) un circuit de calcul, pour chaque point d'une image recalée courante, des différences entre le signal de luminosité associé audit point considéré et des signaux de luminosité associés aux mêmes coordonnées spatiales que ledit point considéré dans la N-ième image recalée antérieure ;
   (c) un circuit (34) de sélection de la plus faible de ces différences.

2. Dispositif selon la revendication 1, caractérisé en ce que ledit circuit de calcul desdits moyens (300) de rehaussement du contraste des objets mobiles est un circuit (33) de calcul de p+1 différences entre le signal de luminosité associé audit point considéré et les signaux de luminosité associés, dans la N-ième image recalée antérieure, au point de mêmes coordonnées spatiales et aux p points voisins de ce point antérieur.

3. Dispositif selon l'une des revendications 1 et 2, caractérisé en ce que ledit circuit de sélection (23) est un filtre de rang prévu pour éliminer une ou plusieurs des plus faibles différences ainsi calculées et sélectionner la plus faible des différences résiduelles après cette élimination.

4. Dispositif selon l'une des revendications 1 à 3, caractérisé en ce que les moyens (200,300) de rehaussement de contraste des objets comprennent un circuit (35) de remplacement des différences négatives par la valeur zéro.

5. Dispositif selon l'une des revendications 1 à 4, caractérisé en ce que lesdits moyens de décision (400) comprennent :

   (a) un circuit (43) de multiplication de deux grandeurs directement liées aux signaux de sortie respectifs desdits moyens (200) de rehaussement du contraste des objets à l'intérieur d'une image recalée et desdits moyens (300) de rehaussement du contraste des objets mobiles ;

(b) un circuit (44) de décision à seuil, pour l'extraction finale des signaux qui, au-dessus dudit seuil, sont considérés comme correspondant effectivement aux objets à détecter.

**6.** Dispositif selon l'une des revendications 1 à 4, caractérisé en ce que lesdits moyens de décision (400) comprennent :

(a) un circuit (41) de remplacement des signaux de sortie négatifs du circuit de rehaussement du contraste des objets à l'intérieur d'une image recalée par la valeur zéro ;

(b) un circuit (43) de multiplication de deux grandeurs directement liées aux signaux de sortie respectifs dudit circuit (41) de remplacement et des moyens (300) de rehaussement du contraste des objets mobiles ;

(c) un circuit (44) de décision à seuil, pour l'extraction finale des signaux qui, au-dessus dudit seuil, sont considérés comme correspondant effectivement aux objets à détecter.

**7.** Dispositif selon l'une des revendications 1 à 4, caractérisé en ce que lesdits moyens de décision (400) comprennent :

(a) un circuit (42) de remplacement des signaux de sortie négatifs du circuit de rehaussement du contraste des objets mobiles par la valeur zéro ;

(b) un circuit (43) de multiplication de deux grandeurs directement liées aux signaux de sortie respectifs des moyens (200) de rehaussement du contraste des objets à l'intérieur d'une image recalée et dudit circuit (43) de remplacement ;

(c) un circuit (44) de décision à seuil, pour l'extraction finale des signaux qui, au-dessus dudit seuil, sont considérés comme correspondant effectivement aux objets à détecter.

**8.** Dispositif selon l'une des revendications 5 à 7, caractérisé en ce que le seuil dudit circuit (44) de décision est prédéterminé en fonction du nombre maximal d'alarmes voulu.

**9.** Dispositif selon l'une des revendications 5 à 7, caractérisé en ce que le seuil dudit circuit (44) de décision est choisi de façon à optimiser un critère reliant la probabilité de fausse alarme et le taux de détection, tel que le rapport du nombre d'objets détectés au nombre de fausses alarmes.

**10.** Dispositif selon l'une des revendications 1 à 9, caractérisé en ce que lesdits moyens de recalage, de rehaussement de contraste, et de sélection définitive des objets détectés sont commandés par des moyens de cadencement à la fréquence de signaux vidéo, prévus pour faire fonctionner le dispositif en temps réel.

**Patentansprüche**

**1.** Anordnung zur Detektion eines oder mehrerer Objekte in einer Bildfolge, wobei die genannte Anordnung vor allem Mittel zur Bildglättung umfaßt, außerdem dadurch gekennzeichnet, daß sie folgendes umfaßt:

(A) parallel am Ausgang der genannten Glättungsmittel: Mittel (200) zur Erhöhung des Kontrasts der Objekte innerhalb eines geglätteten Bildes und Mittel (300) zur Erhöhung des Kontrasts der beweglichen Objekte zwischen zwei geglätteten Bildern;

(B) Entscheidungsmittel (400), die die Ausgangssignale der genannten Mittel (200, 300) zur Erhöhung des Kontrasts empfangen und der endgültigen Selektion der detektierten Objekte durch Extraktion der betrachteten Signale als solche, die den detektierten Objekte entsprechen, dienen;

wobei die genannten Mittel (200) zur Erhöhung des Kontrasts der Objekte innerhalb eines geglätteten Bildes alle auf die Punkte des geglätteten Bildes einwirken - mit Ausnahme derer, die sich am Rand des Bildes befinden - und in Reihe folgendes umfassen:

(a) ein Tiefpaßfilter (21), um für jeden der genannten Punkte und im besonderen für p benachbarte Punkte jedes betrachteten Punktes einen lokalen Helligkeitsmittelwert zu bestimmen;

(b) eine Rechenschaltung (22), um für jeden der genannten p benachbarten Punkte des genannten betrachteten Punktes die Differenz zwischen dem zu dem genannten Punkt gehörenden Helligkeitssignal und dem lokalen Helligkeitsmittelwert, der von dem genannten Filter für einen jeweiligen Punkt der genannten p benachbarten Punkte bestimmt wurde, zu berechnen;
(c) eine Schaltung (23) zur Selektion der geringsten oder einer der geringsten dieser Differenzen, die das Ausgangssignal der genannten Mittel (200) zur Erhöhung des Kontrasts darstellt;

und wobei die genannten Mittel (300) zur Erhöhung des Kontrasts der beweglichen Objekte für jeden Punkt des betrachteten, geglätteten Bildes folgendes umfassen:

(a) einen Speicher (31) zur temporären Speicherung von N dem momentanen geglätteten Bild vorangegangenen geglätteten Bildern, wobei N eine positive ganze Zahl ist;
(b) eine Rechenschaltung, um für jeden Punkt eines momentanen geglätteten Bildes die Differenzen zwischen dem zu dem betrachteten Punkt gehörenden Helligkeitssignal und der zu den gleichen räumlichen Koordinaten wie dem genannten betrachteten Punkt in dem n-ten vorangegangenen geglätteten Bild gehörenden Helligkeitssignale zu berechnen;
(c) eine Schaltung (34) zur Selektion der geringsten dieser Differenzen.

2. Anordnung nach Anspruch 1, dadurch gekennzeichnet, daß die genannte Rechenschaltung der genannten Mittel (300) zur Erhöhung des Kontrasts der beweglichen Objekte eine Schaltung (33) zur Berechnung von p+1 Differenzen zwischen dem zu dem betrachteten Punkt gehörenden Helligkeitssignal und den Helligkeitssignalen ist, die in dem n-ten vorangegangenen, geglätteten Bild zu dem Punkt mit den gleichen räumlichen Koordinaten und den p benachbarten Punkten dieser vorherigen Punktes gehören.

3. Anordnung nach einem der Ansprüche 1 und 2, dadurch gekennzeichnet, daß die genannte Schaltung zur Selektion (23) ein Rangfilter zur Eliminierung einer oder mehrerer der geringsten so berechneten Differenzen und zur Selektion der geringsten der restlichen Differenzen nach dieser Eliminierung ist.

4. Anordnung nach einem der Ansprüche 1 bis 3, dadurch gekennzeichnet, daß die Mittel (200, 300) zur Erhöhung des Kontrasts der Objekte eine Schaltung (35) zum Ersetzen der negativen Differenzen durch den Wert null umfassen.

5. Anordnung nach einem der Ansprüche 1 bis 4, dadurch gekennzeichnet, daß die genannten Entscheidungsmittel (400) folgendes umfassen:

(a) eine Schaltung (43) zur Multiplikation von zwei Größen, die direkt mit den Ausgangssignalen der genannten Mittel (200) zur Erhöhung des Kontrasts der Objekte innerhalb eines geglätteten Bildes bzw. der genannten Mittel (300) zur Erhöhung des Kontrasts der beweglichen Objekte zusammenhängen;
(b) eine Schwellenwert-Entscheidungsschaltung (44) zur endgültigen Extraktion der Signale, die oberhalb dieser Schwelle als den zu dektierenden Objekten tatsächlich entsprechend betrachtet werden.

6. Anordnung nach einem der Ansprüche 1 bis 4, dadurch gekennzeichnet, daß die genannten Entscheidungsmittel (400) folgendes umfassen:

(a) eine Schaltung (41) zum Ersetzen der negativen Ausgangssignale der Schaltung zur Erhöhung des Kontrasts der Objekte innerhalb eines geglätteten Bildes durch den Wert null;
(b) eine Schaltung (43) zur Multiplikation von zwei Größen, die direkt mit den Ausgangssignalen der genannten Schaltung (41) zum Ersetzen bzw. der Mittel (300) zur Erhöhung des Kontrasts der beweglichen Objekte zusammenhängen;
(c) eine Schwellenwert-Entscheidungsschaltung (44) zur endgültigen Extraktion der Signale, die oberhalb dieser Schwelle als den zu dektierenden Objekten tatsächlich entsprechend betrachtet werden.

7. Anordnung nach einem der Ansprüche 1 bis 4, dadurch gekennzeichnet, daß die genannten Entscheidungsmittel (400) folgendes umfassen:

(a) eine Schaltung (42) zum Ersetzen der negativen Ausgangssignale der Schaltung zur Erhöhung des Kontrasts der beweglichen Objekte durch den Wert null;
(b) eine Schaltung (43) zur Multiplikation von zwei Größen, die direkt mit den Ausgangssignalen der genannten Mittel (200) zur Erhöhung des Kontrasts der Objekte innerhalb eines geglätteten Bildes bzw. der genannten Schaltung (43) zum Ersetzen zusammenhängen;

(c) eine Schwellenwert-Entscheidungsschaltung (44) zur endgültigen Extraktion der Signale, die oberhalb dieser Schwelle als den zu dektierenden Objekten tatsächlich entsprechend betrachtet werden.

8. Anordnung nach einem der Ansprüche 5 bis 7, dadurch gekennzeichnet, daß der Schwellenwert der genannten Entscheidungsschaltung (44) vorab in Abhängigkeit von einer maximalen, gewünschten Anzahl von Alarmmeldungen bestimmt wird.

9. Anordnung nach einem der Ansprüche 5 bis 7, dadurch gekennzeichnet, daß der Schwellenwert der Entscheidungsschaltung so gewählt wird, daß ein Kriterium optimiert wird, welches die Wahrscheinlichkeit eines Fehlalarms und den Detektionsgrad verbindet, beispielsweise das Verhältnis zwischen der Anzahl detektierter Objekte und der Anzahl von Fehlalarmen.

10. Anordnung nach einem der Ansprüche 1 bis 9, dadurch gekennzeichnet, daß die genannten Mittel zur Glättung, Erhöhung des Kontrasts und endgültigen Selektion der detektierten Objekte durch Taktsteuerungsmittel mit der Videosignalfrequenz gesteuert werden, um die Anordnung in Echtzeit funktionieren zu lassen.

## Claims

1. A device for the detection of one ore more objects in sequence of image, said device notably comprising means for the registration of images and also being characterized in that it comprises:

    (A) connected parallel to the output of said registration means, means (200) for enhancing the contrast of objects within a registered image and means (300) for enhancing the contrast of moving objects between two registered images;
    (B) decision means (400) which receive the output signals of said contrast enhancing means (200, 300) and are intended to make the final selection of detected objects by extraction of signals considered to correspond to the objects detected;

    said means (200) for enhancing the contrast of objects within a registered images acting on each point of the registered image with the exception of the points situated at the edge of the image, and comprising a series connection of:

    (a) a low-pass filter (21) which is provided to determine a local average luminosity for each of said points and in particular for p points neighboring each point considered;
    (b) a circuit (22) for calculating, for each of said p points neighboring each point considered, the difference between the luminosity signal associated with said point considered and the local average luminosity determined by said filter for a respective one of said p neighboring points;
    (c) a circuit (23) for selecting the smallest, or one of the smallest, of these differences which constitutes the output signal of said contrast enhancing means (200);

    said means (300) for enhancing the contrast of moving objects comprising, for each point of the registered image considered:

    (a) a memory (31) for the temporary storage of N images registered prior to the current registered image, N being a positive integer;
    (b) a circuit for calculating, for each point of a current registered image, differences between the luminosity signal associated with the point considered and luminosity signals associated with the same spatial coordinates as said point considered in the $N^{th}$ prior registered image;
    (c) a circuit (34) for selecting the smallest of these differences.

2. A device as claimed in Claim 1, characterized in that said calculation circuit of said means (300) for enhancing the contrast of moving objects is a circuit (33) for calculating $p+1$ differences between the luminosity signal associated with said point considered and the luminosity signals associated, in the $N^{th}$ prior registered image, with the point having the same spatial coordinates and with the p points neighboring this prior point.

3. A device as claimed in one of the Claims 1 and 2, characterized in that said selection circuit (23) is a ranked value filter which serves to eliminate one or more of the smallest differences thus calculated and to select the smallest of the differences remaining after this elimination.

4. A device as claimed in one of the Claims 1 to 3, characterized in that the means (200, 300) for enhancing the contrast of objects comprise a circuit 935) for replacing negative differences by the value zero.

5. A device as claimed in one of the Claims 1 to 4, characterized in that said decision means (400) comprise:

(a) a circuit (43) for the multiplication of two quantities linked directly to the respective output signals of said means (200) for enhancing the contrast of objects within a registered image and said means (300) for enhancing the contrast of moving objects;
(b) a threshold decision circuit (44) for the final extraction of signals which, beyond said threshold, are considered to correspond effectively to the objects to be detected.

6. A device as claimed in one of the Claims 1 to 4, characterized in that said decision means (400) comprise:

(a) a circuit (41) for replacing negative output signals of the circuit for enhancing the contrast of moving objects by the value zero;
(b) a circuit (43) for the multiplication of two quantities linked directly to the respective output signals of said replacement circuit (41) and the means (300) for enhancing the contrast of moving objects;
(c) a threshold decision circuit (300) for the final extraction of signals which, beyond said threshold, are considered to correspond effectively to the objects to be detected.

7. A device as claimed in one of the Claims 1 to 4, characterized in that said decision means (400) comprise:

(a) a circuit (42) for replacing negative output signals of the circuit for enhancing the contrast of moving objects by the value zero;
(b) a circuit (43) for the multiplication of two quantities linked directly to the respective output signals of the means (200) for enhancing the contrast of objects within a registered image and of said replacement circuit (43);
(c) a threshold decision circuit (44) for the final extraction of signals which, beyond said threshold, are considered to correspond effectively to the objects to be detected.

8. A device as claimed in one of the Claims 5 to 7, characterized in that the threshold of said decision circuit (44) is predetermined as a function of the desired maximum number of alarms.

9. A device as claimed in one of the Claims 5 to 7, characterized in that the threshold of said decision circuit (44) is chosen so as to optimize a criterion linking the probability of false alarm and the detection rate, for example the ratio of the number of detected objects to the number of false alarms.

10. A device as claimed in one of the Claims 1 to 9, characterized in that said means for registration, contrast enhancement and final selection of detected objects are controlled by means operating at video signal frequency so as to achieve real-time operation of the device.

FIG. 1

FIG. 2

FIG. 3a

FIG. 3b

FIG. 4a

FIG. 4b